# EUROPEAN PATENT APPLICATION

(11) **EP 4 672 542 A1**
(43) Date of publication of application: **31.12.2025**
(21) Application number: 24183918.2
(22) Date of filing: 24.06.2024
(51) Int. Cl.: H02J 7/00

(54) **METHOD TO CREATE USAGE HISTORY DATA FOR A POWER TOOL, BATTERY USED IN THE METHOD, POWER TOOL AND POWER TOOL SYSTEM USING THE METHOD**

(71) Applicant: Hilti Aktiengesellschaft, 9494 Schaan (LI)
(72) Inventor: Malik, Muhammad Salman, 86159 Augsburg (DE); Matanovic, Josip, 80634 München (DE)
(74) Representative: Hilti Aktiengesellschaft Corporate Intellectual Property

(57) **Abstract**

A method to create usage history data for a power tool comprising the steps of: providing time information by a real time clock of a first battery; transferring the time information from the first battery to the power tool, when the first battery is attached to the power tool; creating usage history data by the power tool, using the time information from the battery and usage information from the power tool; and storing the usage history data on the power tool.

## Description

### FIELD OF INVENTION

The present invention relates to a method to create usage history data for a power tool, to a battery used for the method, a power tool and a power tool system for using the method, and to a computer program product to carry out the method.

### BACKGROUND OF THE INVENTION

In asset management systems for power tools, power tools often create their own data, e.g., data on their cumulative usage, e.g., the total cumulative runtime of a power tool. The total cumulative runtime of a power tool may be used for calculating when the next service of a power tool is necessary. For various use cases, e.g., for optimization of the use of power tools on construction sites, it is advantageous, if power tools can create a usage history, e.g., on which days a specific power tool has been used or, additionally, the amount per day a power tool is used.

Not all power tools are equipped with real time clocks to add a timestamp, indicating, e.g., day, month, year, time and/or time zone to their data. For cumulative usage a relative measurement, e.g., that the runtime of the power tool is a number of seconds or minutes, is sufficient. Even if there is a real time clock, not all real time clocks can derive the time zone in which a power tool is operating or can be easily adjusted when there is a delay of the real time clock vs. a time standard over time.

Such power tools may need current time and local time-zone information to create their usage history, e.g., their daily usage history or daily usage intensity history, to generate this data according to the local time where the power tool is operating.

Power tools may be additionally equipped with wireless connectivity to send their data to a backend platform. E.g., cellular connectivity may be used to send data to the backend platform; local connectivity, e.g., Bluetooth or Wi-Fi, may be used to send data via gateways or smartphones to the backend platform. Power tools may also transfer generated data to attached batteries. Afterwards, when these batteries are charged, the charger can read this data and forward it to the backend platform.

Therefore, power tools should be able to add time information, such as a timestamp, to their usage data to create a usage history. Otherwise, it may not be possible to deduct correct conclusions from usage data without any timestamp or from usage data with wrong timestamps, e.g., if it cannot be determined when or how much a power tool has been used in a specific time period.

### DISCLOSURE OF THE INVENTION

A method to create usage history data for a power tool is proposed. The method is comprising the steps of: providing time information by a real time clock of a first battery; transferring the time information from the first battery to the power tool, when the first battery is attached to the power tool; creating usage history data by the power tool, using the time information from the battery and usage information from the power tool; and storing the usage history data on the power tool.

By having a real time clock on a battery, which may be used to supply a power tool, it is not necessary to have a real time clock on the power tool itself, as the power tool can derive time information from the battery whenever the power tool is used with the battery.

The power tool may be, e.g., a saw, a driver, a wrench, a rotary hammer, a drill, or a screwdriver. Power tools are often supplied with power by exchangeable battery packs, often called just batteries. The batteries are charged from time to time at chargers.

A real time clock can be integrated into a battery. A real time clock is a clock which is able to not only provide relative information on time, e.g., such as how long a time period is; however, a real time clock may provide information on the current date, the current time and/or the current time zone. A real time clock may also operate under the coordinated universal time (UTC). Often a real time clock is implemented as integrated circuit, often with a quartz resonator and with a separate power source, e.g., a super capacitor, which is charged from time to time. There are also software real time clocks, which may be implemented in embedded systems.

When a battery is connected to a power tool, in addition to the power supply lines, also data lines may be established between the power tool and the battery. There may be also a wireless communication of the battery with the power tool, the battery is attached to. Using a wired or wireless communication the battery can provide the power tool with time information, e.g., the current day, the time in various formats, such as year, month, day, hour, minutes, seconds, and/or the time zone. The time information may be sent when attaching a battery to a power tool, when the power tool requests the time information from an attached battery and/or as a push message from time to time by the battery, when attached to a power tool. The power tool can now process usage information available and/or stored on the power tool together with the time information and, e.g., attach a time stamp to the usage information and/or store any form of usage history data, e.g., data comprising usage information in combination with information derived from the time information received from the battery. The usage history data is stored on the power tool.

A multi-battery power tool, e.g., a power tool which operates with 2 or more batteries at the same time, may get time information by a real time clock of any or several of the attached batteries. The power tool may choose to use the highest time value it receives from the attached batteries.

Usage history may comprise operational or statistical data, e.g., runtime, application count, history or frequency of certain events or errors.

In an embodiment, the method is further comprising the step of transferring the usage history data from the power tool to the first and/or to a second battery, when the first and/or the second battery is attached to the power tool.

The usage history data is particularly valuable when transferred from the power tool to an evaluation system which can process the usage history data. The battery may be used as a kind of shuttle for the usage history data and receive and store the usage history data. The battery may even comprise means for sending the battery usage data, e.g., to a backend.

In a further embodiment, the method is further comprising the step of transferring the usage history data from the first and/or the second battery to a charger, when the first and/or the second battery is attached to the charger.

The battery can transfer usage history data, which it might have received from the power tool to the charger. The battery is regularly attached to the charger to recharge. The transfer can be done by wireless or wired connections of the battery to the charger.

In a further embodiment, the method is further comprising the step of transferring the usage history data from the charger to a backend.

Chargers are particularly connected to the electric grid and may have various possibilities for communication, e.g., wireless communication or wired communication may be used. Chargers can be equipped with cellular connectivity and/or can act as a gateway. By transferring the usage history data to a backend, the usage history of a power tool may be used to optimize the operation of power tools, e.g., the number of power tools on a construction site may be reduced to the necessary level.

Alternatively a battery may also be equipped with wireless connectivity, e.g., cellular connectivity, to send usage history data to a backend platform, or local connectivity, to send usage history data via a gateway or a smartphone to a backend.

In a further embodiment, the method is further comprising the step of transferring the usage history data from the power tool via a wireless connection to a gateway or to the backend.

Alternatively or additionally to using batteries as data shuttles, power tools may have their own connectivity, e.g., via a cellular or a WiFi network. A power tool may also use such a connection to transfer the usage history data to a backend. This may be done directly, e.g., by cellular connectivity, of indirectly, e.g., by sending the usage history data via WiFi to a gateway and the gateway transferring the data further to the backend.

In a further embodiment, the method is further comprising the steps of transferring time synchronization information from the backend to the charger and/or transferring the time synchronization information from the charger to the battery.

The connection and data exchange between chargers and batteries can also be used to update real time clocks on the battery. E.g., the batteries might receive time zone information or information about the exact current time and date as time synchronization information from the backend providing this information to a charger. The charger may register with the backend and receive time synchronization information regularly or request such information when a battery is attached to the charger. The charger may have access also to time information such as time zone or the current time, e.g., via time service on a cloud platform, GPS module and/or cellular connectivity.

In a further embodiment, the usage history data comprises information on the usage and/or non usage of the power tool on a day, the amount of usage of the power tool on the day, particularly, the usage history comprising information on the time zone in which the power tool has been operating on the day.

The usage history data can have various formats and contents. E.g., the usage history data may simply comprise the days on which a power tool was operating at least once and/or the days on which the power tool was not operating, where appropriate with a flag indicating use or non-use. The usage history may also comprise information on how long a power tool was operating on the respective day. More granular usage history data may also be possible, e.g., the hours in which the power tool was operating. To avoid any inconsistency of data in the backend, the time zone and/or the time and date in UTC may be provided.

A battery for a power tool system is proposed, comprising a real time clock and a sending module for sending time information to a power tool when the battery is attached to the power tool.

A battery is a convenient way to provide time information such as current time and date to power tools. One battery can be used to provide the time information to various power tools and thereby also synchronizing the time and date used by the power tools.

In a further embodiment, the battery is further comprising a synchronization module for receiving synchronization information from a charger, when the battery is attached to the charger, for synchronization of the real time clock.

In particular, several batteries are charged on one charger. Therefore, a charger may be used to synchronize the batteries charged with this charger. With the synchronization information the real time clock of the battery may be adjusted, or time zone information may be given to the real time clock, e.g., to a real time clock operating on UTC, thus the battery can provide a power tool with the correct time zone.

In a further embodiment, the battery is further comprising a usage history data transfer module configured to receive usage history data from the power tool, when the battery is attached to the power tool, to store the usage history data and to transfer the usage history data to the charger, when the battery is attached to the charger.

Batteries may be used as data shuttles between power tools and chargers. E.g., transferring synchronized time information from the chargers to power tools and/or transferring usage history data from the power tools to chargers. For this, the batteries may have a processor, a data storage or storage module, and/or communication capabilities.

A battery may wake up an attached power tool to enable the power tool to read time information from the real time clock from the battery, to update its usage history data and write its updated usage history to the attached battery.

A power tool is proposed, comprising a receiving module configured to receive time information from a battery, when the battery is attached to the power tool, a processor to process usage data of the power tool and the time information to usage history data, and a storage module for storing the usage history data.

Alternatively to providing each power tool with a real time clock and means for synchronizing this real time clock and getting time zone data, batteries of the power tools may be used to obtain time information by the power tools. The power tools then can use this time information for processing usage data by a processor of the power tool to usage history data and store the usage history in a storage module on the power tool.

A power tool may configure an attached battery on how often or when to wake up the power tool.

A power tool system is proposed, comprising at least the described power tool and the disclosed battery.

Power tools, batteries and chargers can operate together in a power tool system. The various parts of the system are usually adapted to each other in a way that connections and communications protocols are harmonized and a smooth operation of the combinations is possible.

In a further embodiment, the power tool of the power tool system is further comprising a communication module for wireless or wired transmission of the usage history data stored in the storage module, in particular the communication module is configured to send the usage history data to the usage history data transfer module of the described battery, when the battery is attached to the power tool.

In a further embodiment, the power tool system is further comprising a charger, in particular, a charger configured to receive the usage history data from the usage history data transfer module of the described battery, when the battery is attached to the charger.

As also explained with regard to the method, chargers configured to receive data from the power tools can be used to transfer such data, e.g., usage history data, to a backend for evaluation. Chargers may also be used as centralized data hubs for several batteries used on several power tools.

A computer program product is proposed, comprising instructions which, when the program is executed by a computer, cause the computer to carry out the described method to create usage history data for a power tool with the described battery, the described power tools, and/or the described power tool system.

The various embodiments of the method for creating usage history data for a power tool may be combined with the disclosed battery, the described power tool system, and/or the disclosed computer program product.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE DRAWINGS

Further embodiments, features and advantages of the present invention will become apparent from the subsequent description and dependent claims, taken in conjunction with the accompanying drawings, in which:
- Fig. 1: shows a schematic overview of a power tool system with a power tool, a battery, and a charger;
- Fig. 2: shows a flowchart for a method to create usage history data for a power tool; and
- Fig. 3: shows an alternative schematic representation for an example how the usage history data may be created by a power tool.

In the Figures, like reference numerals designate like or functionally equivalent elements, unless otherwise indicated.

### DETAILED DESCRIPTION OF ILLUSTRATIVE EMBODIMENTS

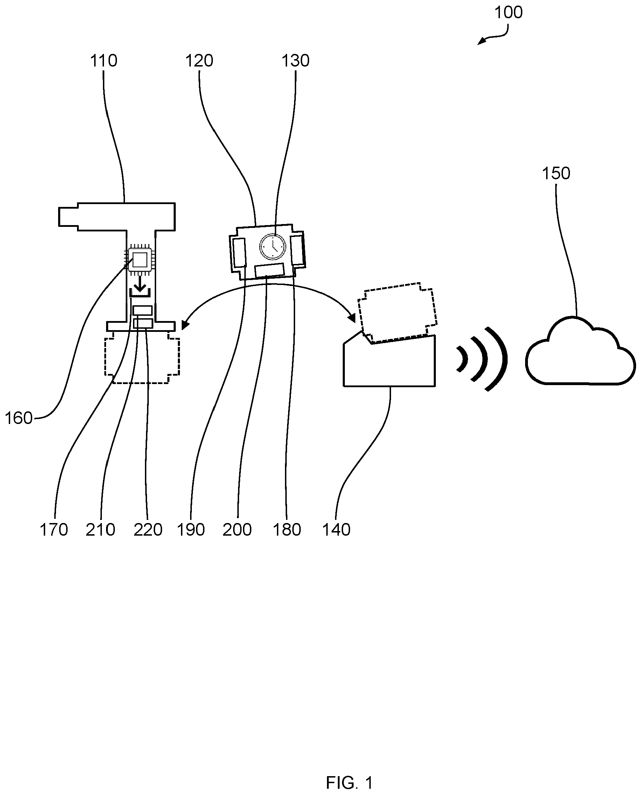

Fig. 1 shows a schematic overview of a power tool system 100 with a power tool 110, a battery 120, and a charger 140. The power tool 110 may be, e.g., a saw, a driver, a wrench, a rotary hammer, a drill, or a screwdriver. The battery 120 can be attached to the power tool 110 to supply the power tool 110 with electrical power. The battery 120 can be attached to the charger 140 to be recharged by the charger 140. The battery 120 is a rechargeable battery 120. The power tool 100 system may comprise one or more of similar or different power tools 110, one or more similar or different batteries 120 which can be attached exchangeable to the power tools 110 and which may be attached for charging to one or more chargers 140 of the power tool system 100. The battery 120 comprises a real time clock 130. The real time clock 130 can be synchronized with information from the charger 140, e.g., the charger 140 may transfer the current time and/or the current time zone, in which the charger 140 is situated, to the real time clock 130 of the battery 120. For synchronization of its real time clock 130 the battery 120 comprises a synchronization module 180. The charger 140 may receive the synchronization information from a backend 150, the backend 150, e.g., implemented via a cloud. The charger 140 may be connected by wireless or wired connection to the backend 150. When the battery 120 is detachably attached to the power tool 110, the battery 120 can transfer time information from the real time clock 130 to the power tool 110 via a sending module 190 of the battery 120 and a receiving module 210 of the power tool. The power tool 110 can process the time information and usage information of the power tool 110 with a processor 160 to usage history data and store this usage history data in a storage module 170 on the power tool 110. With a usage history data transfer module 200 the battery 120 can receive usage history data from a communication module 220 of the power tool 110, when the battery 120 is attached to the power tool 110, the usage history data transfer module 200 can store the usage history data and the usage history data can later be transferred to the charger 140, when the battery 120 is attached to the charger 140. Various modules within the power tool 110, within the battery 120, and/or within the charger 140 may use the same or different processors, communication devices, and/or data storages within the power tool 110, within the battery 120, and/or within the charger 140.

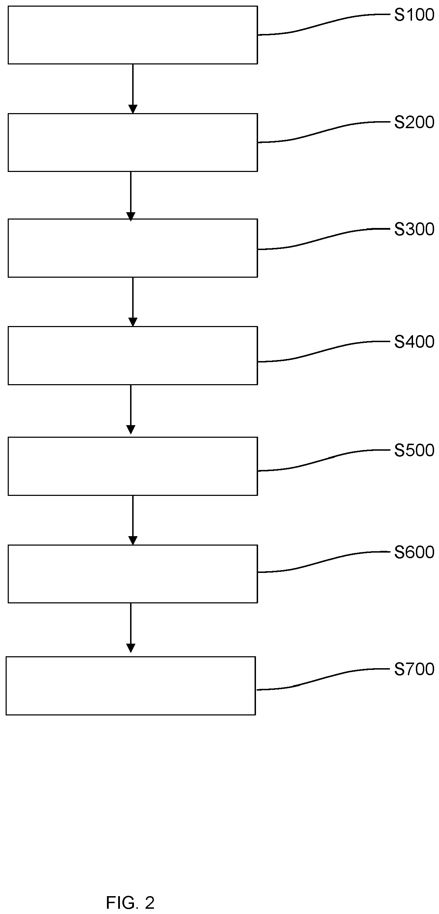

Fig. 2 shows a flowchart for an embodiment of a method to create usage history data for a power tool 110. In step S100 time information is provided by a real time clock 130 of a battery 120. In step S200 the time information is transferred from the battery 120 to the power tool 110, the battery 120 is attached for this step to the power tool 110. In step S300 the power tool 110 uses the time information received from the battery 120 to create usage history data; for this step the usage information from the power tool 110, e.g., that the power tool 110 has been used, is combined with the time information, e.g., the current day, to usage history data. In step S400, the usage history data is stored on the power tool 110. In step S500, the usage history data is transferred from the power tool 110 to the battery 120, the battery 120 is attached to the power tool 110 in this step. In step S600, the usage history data is transferred from the battery 120 to a charger 140, the battery 130 is attached to the charger 140 in this step. In step S700, the usage history data is transferred from the charger 140 to a backend 150. Alternatively to the steps S500 to S700, the power tool 110 may also use a communication module 220 to transfer usage history data directly, e.g., via a cellular or local connectivity, to the backend 150. Alternatively to the steps S600 to S700, the battery 120 may also use a battery communication module to transfer usage history directly, e.g., via a cellular or local connectivity, to the backend 150. Local connectivity may comprise, e.g., a wireless connectivity such as WiFi.

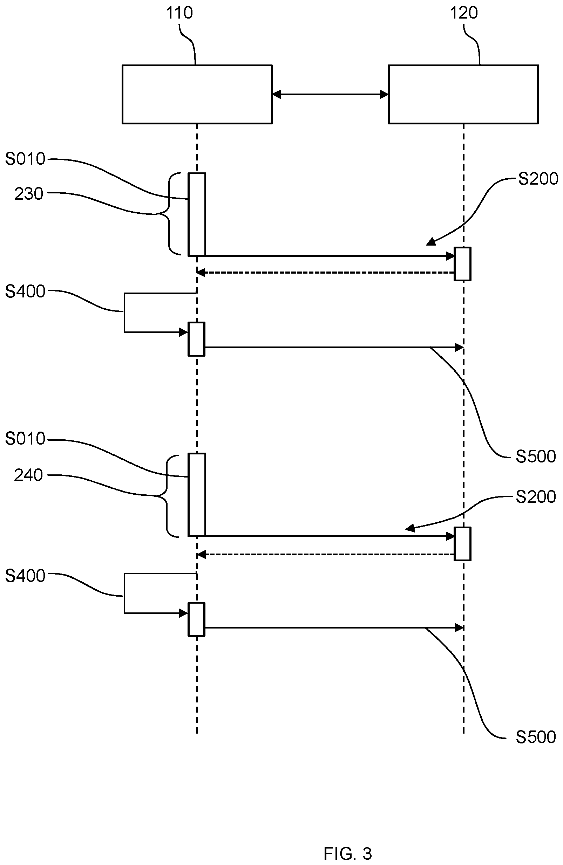

Fig. 3 shows an alternative schematic representation for an example how the usage history data may be created by a power tool 110. The power tool 110 is used in step S010 and in step S200, e.g., at the end of the use, the power tool 110 request the time information, e.g., the current time and local time-zone, from its attached battery 120, the battery 120 responds with the requested time information. The power tool 110 can now process, e.g., with processor 160, in the not in Fig. 3 shown step S300, the information that it has been used and the time information, and store in step S400 the information that the power tool 110 is used on day-x in its usage history. I.e., on day-x, the following information can be stored on the power tool 110, e.g., in the storage module 170 of the power tool 110:

| **Day** | **Tool status** |
|---|---|
| Day-x | Tool is used |

The power tool 110 can also transfer the usage data history in step S500 to its attached battery 120.

If the power tool 110 is used again in a repeated step S010, it again reads in a repeated step S200 the current time and local time-zone information from its attached battery and can now mark in a repeated step S400 the power tool 110 as used, e.g., on day-x+5 in its usage history.

The power tool 110 may also mark itself as not being used from day-x+1 till day-x+4 in this usage history, which might be a daily usage history.

On day-x+5, the following information may be stored in the power tool 110 about its daily usage history:

| **Day** | **Tool status** |
|---|---|
| Day-x | Tool is used |
| Day-x+1 | Tool is not used |
| Day-x+2 | Tool is not used |
| Day-x+3 | Tool is not used |
| Day-x+4 | Tool is not used |
| Day-x+5 | Tool is used |

The power tool 110 may also transfer this usage history data in a repeated step S500 to its attached battery 120.

However, the power tool 110 may also use additional information such as the duration of operation, e.g., the duration x1 230 and the duration x2 240, to create usage history data. A power tool 110 may be used, e.g., continuously for longer intervals that may span over multiple days, e.g., the power tool 110 is used in construction of roads and bridges at night times around midnight local time. If the power tool 110 only reads current time and local time-zone information from its attached battery 120 at the end of its operation or use, it may not mark it is used on the day when it started to be used or the duration it was used during this day. In embodiments, the power tool 110 may regularly read current time and local time-zone information from its attached battery during its usage to correctly mark its usage on a day or on multiple days, e.g., by sending requests for time information to the battery 120. The power tool 110 may also use its information on the period of its operation to compute in step S300 the correct usage on a day or on multiple days.

A power tool 110 may also create its own usage intensity history, particularly its own daily usage intensity history. When the power tool 110 is operated for a certain duration, it may also read the real time clock and local time-zone from the attached battery 120 to correctly aggregate the daily usage intensity. E.g., the power tool 110 is used for time-interval or duration x1 230 and a time-interval x2 240 on the same day-x. At the end of each usage, the power tool 110 can read the current time and local time-zone information from the attached battery 120 and can aggregate its usage intensity on day-x, e.g., in step S300, and store it in step S400 in its daily usage intensity history.

In embodiments, a power tool 110 may also read current time information, such as time and local time-zone information, from its attached battery 120 periodically during usage, e.g., regularly after a reasonably short interval x3, e.g., every minute or every 6 minutes, to correctly attribute this usage interval x3 to the correct corresponding day, according to the current time and local time-zone information.

A power tool 110 may have a definition of usage for the purpose of a usage history, e.g., that operations up to a predefined break in between are considered a continuing usage. The power tool 110 might make use of such a definition when processing the information on use of the power tool 110 and the time information to usage history data.

A power tool 110 may have wireless connectivity to send data to the backend 150 directly or via gateways. Power tools 110 may also write their latest usage history data to attached batteries 120 and when these batteries 120 are charged, chargers 140 may read the latest data and send it to the backend 150.

Batteries 120 may also be equipped with wireless connectivity to send data to the backend 150 directly or via gateways.

If a power tool 110 was last used with a battery 120 on day-x and the battery 120 is detached from this power tool 110 on day-x+10 without additional operation of the power tool after day-x, the power tool 110 might only have stored the daily usage history up to day-x. It may be unfavorable if the power tool 110 has stored only its daily usage history on its attached battery up to day-x, as no later use has been occurred which might have led to an additional transfer of the usage history data to the battery 120. The information that the power tool 110 has not been used between day-x to day-x+10 might therefore be missing in the transferred usage history data till the power tool 110 is used again. It might be also difficult to distinguish when the power tool 110 was last used with a battery 120 and when it is last seen with this battery 120.

To overcome this problem the battery 120 may send wake up calls to an attached power tool 110 to enable the power tool 110 to read time information from the real time clock from the battery 120 and update its usage history. E.g., the power tool 110 was last used on day-x. A battery 120 sends a wake-up call to the power tool 110 periodically, e.g., on day-x+1, day-x+2, ..., day-x+n. On waking up, the power tool 110 reads the current time and local time-zone information from the attached battery 120 and marks itself as not used on these days, i.e., on day-x+1, day-x+2, ..., day-x+n. The power tool 110 may similarly update its daily usage intensity history. The power tool 110 may write its updated daily usage history and/or daily usage intensity history to its attached battery 120. After the transfer of usage history data as in step S500, the power tool 110 and the battery 120 may return to a sleep mode.

A power tool 110 may also configure a battery 120 on how often or when to wake up the power tool 110. E.g., on every usage or on every wake-up event, the power tool 110 can configure the attached battery 120 when to wake it up next time.

### REFERENCE NUMERALS

- 100: power tool system
- 110: power tool
- 120: battery
- 130: real time clock
- 140: charger
- 150: backend
- 160: processor of power tool
- 170: storage module of power tool
- 180: synchronization module
- 190: sending module of battery
- 200: usage history data transfer module
- 210: receiving module of power tool
- 220: communication module of power tool
- 230: duration x1
- 240: duration x2

- S010: operation of power tool
- S100: providing time information by real time clock
- S200: transfer of time information from battery to power tool
- S300: creating usage history data from usage information and time information
- S400: storing usage history data on power tool
- S500: transferring usage information from power tool to battery
- S600: transferring usage information from battery to charger
- S700: transferring usage information from charger to backend

## Claims

1. A method to create usage history data for a power tool (110), comprising the steps of:
- providing (S100) time information by a real time clock (130) of a first battery (120);
- transferring (S200) the time information from the first battery (120) to the power tool (110), when the first battery (120) is attached to the power tool (110);
- creating (S300) usage history data by the power tool (110), using the time information from the battery (120) and usage information from the power tool (110); and
- storing (S400) the usage history data on the power tool (110).

2. The method according to claim 1, further comprising the step of transferring (S500) the usage history data from the power tool (110) to the first and/or to a second battery (120), when the first and/or the second battery (120) is attached to the power tool (110).

3. The method according to claim 1 or 2, further comprising the step of transferring (S600) the usage history data from the first and/or the second battery (120) to a charger (140), when the first and/or the second battery (120) is attached to the charger (140) and/or further comprising the step of transferring (S600) the usage history data from the first and/or the second battery (120) to a backend (150) via a wireless connection, particularly via a cellular connection and/or via a gateway.

4. The method according to any of the claims 1 to 3, further comprising the step of transferring (S700) the usage history data from the charger (140) to the backend (150).

5. The method according to any of the claims 1 to 4, further comprising the step of transferring the usage history data from the power tool (110) via a wireless connection to the gateway or to the backend (150).

6. The method according to any of the claims 1 to 5, further comprising the steps of
- transferring time synchronization information from the backend (150) to the charger (140) and/or
- transferring the time synchronization information from the charger (140) to the first and/or the second battery (120)
and/or the method further comprising the step of
- transferring time synchronization information from the backend (150) to the first and/or second battery (120) via a wireless connection, particularly, a cellular connection.

7. The method according to any of the claims 1 to 6, wherein the usage history data comprises information on the usage and/or non usage of the power tool (110) on a day, and/or the amount of usage of the power tool (110) on the day, particularly, the usage history comprising information on the time zone in which the power tool (110) has been operating on the day.

8. A battery (120) for a power tool system (100), the battery (120) comprising a real time clock (130) and a sending module (190) for sending time information to a power tool (110) when the battery (120) is attached to the power tool (110).

9. The battery (120) according to claim 8, further comprising a synchronization module (180) for receiving synchronization information from a charger (140), when the battery (120) is attached to the charger (140), for synchronization of the real time clock (130).

10. The battery (120) according to claim 8 or 9, further comprising a usage history data transfer module (200) configured to receive usage history data from the power tool (110), when the battery (120) is attached to the power tool (110), to store the usage history data and to transfer the usage history data to the charger (140), when the battery (120) is attached to the charger (140).

11. A power tool (110) comprising:
- a receiving module (210) configured to receive time information from a battery (120), when the battery (120) is attached to the power tool (110);
- a processor (160) configured to process usage data of the power tool (110) and the time information to usage history data; and
- a storage module (170) configured to store the usage history data.

12. A power tool system (100) comprising at least the power tool (110) according to claim 11 and the battery (120) according to any of the claims 8 to 10.

13. The power tool system (100) according to claim 12, wherein the power tool (110) further comprises a communication module (220) for wireless or wired transmission of the usage history data stored in the storage module (170), in particular the communication module (220) is configured to send the usage history data to the usage history data transfer module (200) of the battery (120) according to claim 10, when the battery (120) is attached to the power tool (110).

14. The power tool system (100) according to any of the claims 12 or 13 further comprising a charger (140), in particular, a charger (140) configured to receive the usage history data from the usage history data transfer module (200) of the battery (120) according to claim 10, when the battery (120) is attached to the charger (140).

15. A computer program product comprising instructions which, when the program is executed by a computer, cause the computer to carry out the method of any of the claims 1 to 7 with the battery (120) according to any of the claims 8 to 10 and/or the power tool (110) according to claim 11 and/or the power tool system (100) according to any of the claims 12 to 14.
